# EUROPÄISCHE PATENTSCHRIFT

(11) **EP 1 010 963 B1**
(45) Veröffentlichungstag und Bekanntmachung des Hinweises auf die Patenterteilung: **24.11.2004**
(21) Anmeldenummer: 99120097.3
(22) Anmeldetag: 21.10.1999
(51) Int. Cl.: F41H 5/26

(54) **Panzerglasscheibe für Kraftfahrzeug**
Bullet-proof glass for a vehicle
Bloc de verre blindé pour véhicule

(30) Priorität: 16.12.1998 DE 19858082
(43) Veröffentlichungstag der Anmeldung: 21.06.2000
(73) Patentinhaber: Isoclima GmbH, 81377 München (DE)
(72) Erfinder: Stranner, Siegfried, 81377 München (DE); Wöll, Herwig, 74343 Sachsenheim (DE)
(74) Vertreter: Seitz, Ralf, Dipl.-Ing.

(56) Entgegenhaltungen:
- DE-A- 4 006 708
- DE-C- 19 729 897
- DE-U- 9 310 957

## Beschreibung

Die vorliegende Erfindung betrifft eine Panzerglasscheibe, insbesondere zur Verwendung als versenkbare Seitenscheibe eines Kraftfahrzeugs, gemäß dem Oberbegriff von Anspruch 1.

Eine aus Panzerglas bestehende Fensterscheibe für ein Kraftfahrzeug ist aus der DE 41 42 416 A1 bekannt. Die bekannte Fensterscheibe umfaßt mehrere sandwichartig angeordnete Glasscheiben, insgesamt fünf, von denen die beiden äußeren Glasscheiben über die anderen Glasscheiben am Rand der Panzerglasscheibe vorragen, um eine Abstufung an einer Stirnseitenfläche der Panzerglasscheibe auszubilden. Ein aus Stahlblech bestehendes, gewinkeltes Panzerelement bzw. eine Metallarmierung an der Abstufung verhindert, daß Geschosse, die in einem ungünstigen Winkel am Rand der Panzerscheibe auftreffen, diese durchschlagen können. Allerdings ist hier eine aufwendige Anpassung des Fahrzeugrahmens an die Abmessungen der Panzerglasscheibe erforderlich

In der DE 195 39 607 A1 ist eine Panzerglasscheibe als Windschutzscheibe beschrieben, die als Verbundscheibe aus fünf Glasscheiben mit dazwischen liegenden Verbundschichten ausgebildet ist. Eine der Glasscheiben ragt am Rand der Panzerglasscheibe über die anderen Glasscheiben vor, um einen vorragenden Abschnitt oder Vorsprung auszubilden. Mit dem Vorsprung greift die bekannte Panzerglasscheibe in die Aufnahmeöffnung bzw. Aufnahmenut eines Rahmens oder Türrahmens ein, wenn die Panzerglasscheibe z.B. motorisch in einem Kraftfahrzeug hochgeschoben wird, um das Fenster zu schließen. Hier ist zwar keine extra Anpassung des Fahrzeugrahmens erforderlich, bei Beschuß am Rand der bekannten Panzerglasscheibe kann das Geschoß jedoch in das Fahrzeuginnere gelangen, da der Vorsprung alleine für das Zurückhalten eines Geschosses nicht ausreicht. Bei einem stumpfen Schlag oder bei einer Druckwelle kann der Vorsprung brechen oder bersten und die Scheibe kann nach innen fallen.

In der DE 197 45 248 ist eine Panzerglasscheibe mit Metalleinlage beschrieben, die einen Aufbau mit vier geschichteten Glasscheiben im Verbund aufweist. Die äußere Glasscheibe ragt dabei über die anderen Glasscheiben hinaus, um einen Vorsprung für die Halterung oder den Eingriff der Panzerglasscheibe z.B. an einem Fahrzeugrahmen bzw. in diesen bereitzustellen. Die innere Oberfläche des Vorsprungs ist mit einer Metalleinlage als Armierung ganzflächig abgedeckt. Die weiter innen liegenden Glasscheiben sind an ihren Stirnflächen bündig zueinander, wobei die zur äußeren Glasscheibe benachbarte, zurückgesetzte Glasscheibe stirnseitig stumpf an die Metalleinlage in einem Übergangsbereich anstößt. Durch einen heftigen Schlag auf die Außenseite der Scheibe oder durch eine Druckwelle einer Explosion oder ähnliches kann es zu einem Bruch der äußeren Scheibe an einer Stelle kommen, die benachbart zu dem erwähnten Übergangsbereich ist. Bei ungünstigen Umständen kann bei starker Schlageinwirkung von außen auf die Panzerglasscheibe ein rahmenumlaufender Bruch an dieser Stelle auftreten und die Scheibe in das Fahrzeuginnere fallen.

In dem Dokument DE 197 29 897 C1 ist eine Panzerglasscheibe aus mehreren Scheiben beschrieben, von denen eine äußere Scheibe über die anderen Scheiben mit einem randseitigen Vorsprung vorragt, der in einem Türrahmen angeordnet ist und an der vorstehend erwähnten Schwachstelle durch Schlageinwirkung brechen kann eine solche Panzerglasscheibe ist dem Oberbegriff des Anspruchs 1 zu entnehmen. Am Türrahmen ist innen ein separates Profilelement angebracht, das mit einem Steg in eine randseitige Nut der Panzerglasscheibe eingreift.

Aufgabe der vorliegenden Erfindung ist es, diese Bruchgefahr am Rand der Panzerglasscheibe auszuschließen.

Diese Aufgabe wird durch die Panzerglasscheibe gemäß Anspruch 1 gelöst. Demnach hat die erfindungsgemäße Panzerglasscheibe, insbesondere zur Verwendung als versenkbare Seitenscheibe eines Kraftfahrzeugs, mehrere schichtweise angeordnete Glasscheiben, z.B. aus Panzerglas, und Verbundschichten, wobei mindestens eine Verbundschicht zwischen jeweils zwei benachbarten Glasscheiben angeordnet ist, um die beiden Glasscheiben zu verbinden, eine Abstufung, die am Rand der Panzerglasscheibe ausgebildet ist und einen Vorsprung zum Anbringen oder für den Eingriff der Panzerglasscheibe in einem Rahmen oder Türrahmen hat, und eine Randverstärkung bzw. Armierung oder Metallarmierung, die im Bereich des Vorsprungs zumindest die innenliegende bzw. nach innen weisende Oberfläche des Vorsprungs abdeckt und daran befestigt ist, wobei im Bereich der Abstufung stirnseitig eine Vertiefung ausgebildet ist und sich die Armierung oder Metallarmierung in die Vertiefung hinein erstreckt.

Die Panzerglasscheibe der vorliegenden Erfindung hat den erheblichen Vorteil, daß sich die Schwachstelle am Übergangsbereich zwischen Randverstärkung und Glas innerhalb der Vertiefung erstreckt und folglich durch die Seitenwände der Vertiefung bzw. das benachbarte Glas oder die benachbarten oder angrenzenden Glasscheiben innenseitig und außenseitig umfangen bzw. abgedeckt und abgestützt ist und somit ein Bruch oder eine Abscherung des Vorsprungs an der Schwachstelle vermieden ist. Ein Nachinnenfallen der Panzerglasscheibe aufgrund einer von außen ausgeübten Schlagoder Stoßbelastung ist somit bei der Erfindung vermieden. Durch die Metallarmierung der erfindungsgemäßen Panzerglasscheibe wird zudem ein Geschoß, das am Randbereich der Scheibe auftrifft sicher von einem Eindringen in das Fahrzeuginnere abgehalten. Die Panzerglasscheibe der Erfindung ermöglicht somit eine optimalen Schutz der Fahrzeuginsassen, obwohl die Panzerglasscheibe nur mit einem relativ schmalen Vorsprung an ihrem Randbereich in einem Standartfahrzeugrahmen ohne aufwendiges Umrüsten des Fahrzeugs gehaltert ist, wodurch ein erheblicher Aufwand bei der Leichtpanzerung oder Schwerpanzerung eines Kraftfahrzeugs - auch bei einer Nachrüstung- eingespart wird.

Die erfindungsgemäße Panzerglasscheibe hat zu dem mindestens eine erste außere Glasscheibe, mindestens eine innere dritte Glasscheibe und mindestens eine mittlere, zweite Glasscheibe, die zwischen der äußeren Glasscheibe und der inneren Glasscheibe angeordnet ist, wobei die äußere Glasscheibe über die anderen Glasscheiben vorragt, um den Vorsprung auszubilden, und die innere Glasscheibe im Bereich des Vorsprungs gegenüber der mittleren Glasscheibe vorragt, um die Vertiefung zur Aufnahme der Randverstärkung zwischen der inneren Glasscheibe und der äußeren Glasscheibe auszubilden. Da die innere Glasscheibe über die mittlere Glasscheibe vorragt, überlappt sie die Schwachstelle zwischen der Randverstärkung bzw. Metallarmierung und der mittleren Glasscheibe und verhindert sicher eine Abscherung des Vorsprungs im Bereich der Schwachstelle. Dieser bevorzugte Aufbau der erfindungsgemäßen Panzerglasscheibe ermöglicht eine einfache Herstellung, da die Vertiefung einfach durch Verwendung einer im Vergleich zur inneren Glasscheibe kürzeren mittleren Glasscheibe ausgebildet wird. Die Randverstärkung schließt sich bündig an die Stirnseite der mittleren Glasscheibe an, wodurch die Herstellung der Panzerglasscheibe der Erfindung vereinfacht wird.

Die Metallarmierung ist bevorzugt mittels einer Polyurethanschicht an der benachbarten Glasscheibe bzw. der äußeren Glasscheibe angebracht. Die Verwendung von Polyurethan als Verbundmaterial zwischen der Metallarmierung und der Glasoberfläche stellt einen besonders langzeitstabilen Verbund bereit.

Die Metallrandverstärkung kann als ebener Streifen, als ebener, am Rand der Panzerglasscheibe umlaufender Rahmen oder Rahmenabschnitt ausgebildet sein, wodurch die Herstellung weiter vereinfacht wird und ein lückenlose Randverstärkung ohne Schwachstellen ermöglicht wird. Die Metallrandverstärkung kann jedoch z.B. auch als Winkelstück ausgelegt sein und einen größeren Bereich der Abstufung umfassen.

Die Randverstärkung kann eine Dicke haben, die kleiner als die lichte Weite der Vertiefung ist, um z.B. einen Leerraum oder Hohlraum innerhalb der Vertiefung für die Aufnahme von Fertigungstoleranzen oder unterschiedlichen thermischen Ausdehnungen von Metallarmierung und Glas bereitzustellen.

Vorzugsweise wird ein solcher Hohlraum zwischen der Metalrandverstärkung und den benachbarten Glasscheiben und/oder zwischen der Metallrandverstärkung und den benachbarten Verbundschichten innerhalb der Vertiefung mittels einer Versiegelung gefüllt, um ansonsten freiliegende Schichtenübergänge der Verbundscheibe vor widrigen Umwelteinflüssen und Korrosion zu schützen.

Weitere vorteilhafte Weiterbildungen der vorliegenden Erfindung sind den Unteransprüchen zu entnehmen.

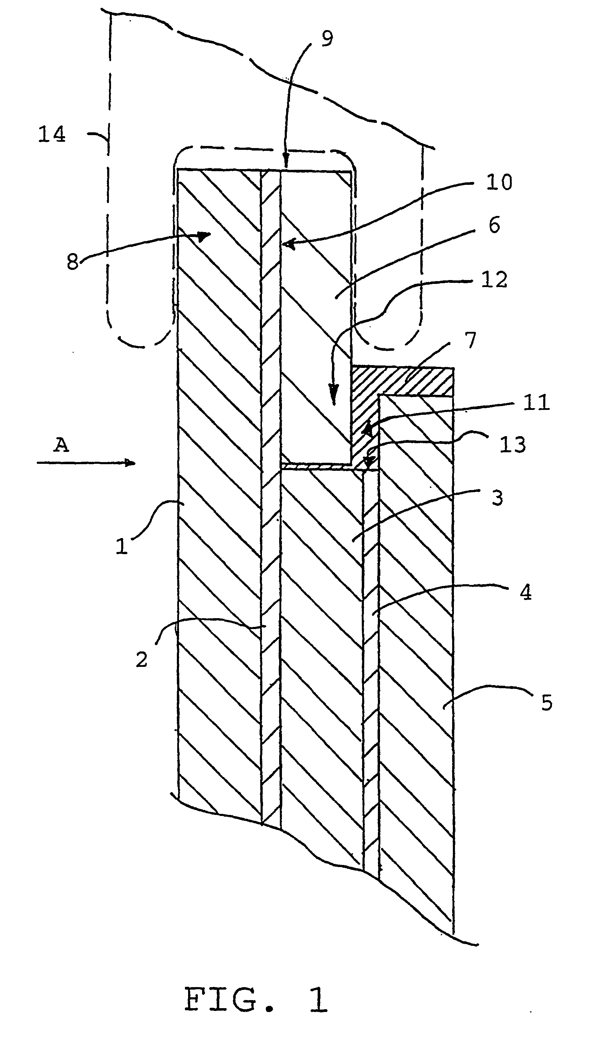

Weitere Vorteile, vorteilhafte Weiterbildungen und Anwendungsmöglichkeiten der vorliegenden Erfindung sind aus der nachfolgenden Beschreibung von Ausführungsformen der Erfindung in Verbindung mit der einzigen Figur 1 ersichtlich.

Die Figur 1 zeigt als einzige Zeichnung eine Teilansicht einer bevorzugten Ausführungsform des Gegenstands der vorliegenden Erfindung im Querschnitt mit einem mit gestrichelter Linie angedeuteten Fahrzeugrahmen.

In der Figur 1 ist eine bevorzugte Ausführungsform der erfindungsgemäßen Panzerglasscheibe gezeigt, die als Verbundsicherheitsglasscheibe ausgebildet ist und mehrere Glasscheiben 1, 3 und 5 und eine Metallrandverstärkung bzw. Metallarmierung 6 aufweist. Nachfolgend wird die in der Figur 1 gezeigte Ausführungsform der Erfindung im Detail unter beispielhafter Bezugnahme auf die Verwendung der erfindungsgemäßen Panzerglasscheibe als versenkbare Seitenscheibe eines Kraftfahrzeugs erläutert.

Die erfindungsgemäße Panzerglasscheibe umfaßt mehrere sandwichartige bzw. laminatartig angeordnete Glasscheiben 1, 3 und 5, wobei die innere, dritte Glasscheibe 5 fahrzeuginnenseitig, die äußere, erste Glasscheibe 1 fahrzeugaußenseitig und die mittlere, zweite Glasscheibe 3 zwischen der äußeren Glasscheibe 1 und der inneren Glasscheibe 5 angeordnet ist, wobei die innere Glasscheibe 5 dicker als die anderen Glasscheiben sein kann. Die Außenseite des Fahrzeugs ist durch den Pfeil A in der Figur 1 verdeutlicht, der auf die äußere Glasscheibe zeigt. Zwischen der äußeren Glasscheibe 1 und der mittleren Glasscheibe 3 erstreckt sich eine Polyurethanschicht 2, die einen Verbund zwischen der äußeren Glasscheibe 1 und der mittleren Glasscheibe 3 ausbildet. Die Polyurethanschicht 2 bzw. Polyurethanfolie ist umriß- und flächendeckungsgleich zur äußeren Glasscheibe 1. Zwischen der mittleren Glasscheibe 3 und der inneren Glasscheibe 5 ist z.B. eine weitere Polyurethanschicht 4 ausgebildet, die wiederum einen festen Verbund zwischen der mittleren Glasscheibe 3 und der inneren Glasscheibe 5 herstellt. Die Polyurethanschicht 4 ist flächenmäßig deckungsgleich zur anstoßenden Oberfläche der mittleren Glasscheibe 3.

Die äußere Glasscheibe 1 ragt über die beiden anderen Glasscheiben 3 und 5 am Rand der gezeigten Panzerglasscheibe mit einem Vorsprung 8 vor, wodurch stirnseitig bzw. randseitig an der Panzerglasscheibe eine Abstufung bzw. Stufe zu den anderen Glasscheiben 3 und 5 hin ausgebildet ist. Auf der im Bereich des Vorsprungs 8 nach innen weisenden Oberfläche 10 der Polyurethanschicht 2 ist die Randverstärkung 6 z.B. aus Stahlblech aufgebracht, die als ein am Rand der Panzerglasscheibe angeordneter Metallrahmen ausgebildet sein kann und mit der äußeren Glasscheibe 1 mittels der Polyurethanschicht 2 einen festen Verbund bildet. An einer Stirnseite 9 der Panzerglasscheibe bzw. an der Stirnseite des Vorsprungs 8 sind die äußere Glasscheibe 1, die Polyurethanschicht 2 und die Metallarmierung 6 bündig zueinander. Die Randverstärkung 6 hat einen rechteckigen Querschnitt. Der Vorsprung 8 mit der Randverstärkung 6 ist in einem Rahmen 14 des Kraftfahrzeugs gehaltert, der in der Figur 1 gestrichelt im Querschnitt angedeutet ist und im Dachbereich des Kraftfahrzeugs verläuft. In der in der Figur 1 gezeigten Stellung greift die Panzerglasscheibe in den Rahmen 14 mit dem Vorsprung 8 ein. Die gezeigt Seitenscheibe ist somit hochgefahren und das Fenster ist geschlossen.

Die innere Glasscheibe 5 ragt im Bereich der Abstufung der gezeigten Panzerglasscheibe über die mittlere Glasscheibe 3 vor, wodurch eine Vertiefung 12 bzw. Nut oder Aufnahme im Bereich zwischen der inneren Glasscheibe 5, der mittleren Glasscheibe 3, die stirnseitig bündig zur Polyurethanschicht 4 ist, und der Polyurethanschicht 2 ausgebildet ist. Die Randverstärkung 6 erstreckt sich in die Vertiefung 12 hinein und stößt in etwa stumpf an die Stirnseite der mittleren Glasscheibe 3 an, wobei ein Spalt oder ein Abstand zwischen den sich gegenüberstehenden Stirnseiten der Randverstärkung 6 und der mittleren Glasscheibe 3 innerhalb der Vertiefung 12 vorgesehen ist. Stirnseitig ist die innere Glasscheibe 5 mit einer Versiegelung 7, z.B. aus Polyurethan, versehen, die zudem Hohlräume 11, einschließlich des Spalts zwischen den sich gegenüberstehenden Sirnseiten der Randverstärkung 6 und der mittleren Glasscheibe 3, innerhalb der Vertiefung 12 zwischen den angrenzenden Oberflächen der Randverstärkung 6, der mittleren Glasscheibe 3, der Polyurethanschicht 4, - bzw. dem Boden 13 der Vertiefung 12 -, der inneren Glasscheibe 5 und der Polyurethanschicht 2 innerhalb der Vertiefung 12 ausfüllt bzw. versiegelt.

Bei einer beispielhaften Panzerglasscheibe der Erfindung betragen die Dicken der äußeren und der mittleren Glasscheibe 1, 3 jeweils 4 mm, die Dicke der inneren Glasscheibe 5 8 mm, die Dicken der Polyurethanschichten 2 und 4 jeweils 1 mm und die Dicke der Randverstärkung aus Stahl 6 etwa 2,5 mm. Auf der Innenfläche der inneren Glasscheibe 5 kann noch eine Schichtenfolge aus Polyurethan und Polycarbonat in dieser Reihenfolge ganzflächig aufgetragen sein, wobei die Dicke dieser zusätzlichen Polyurethanschicht etwa 1,9 mm und die Dicke der Polycarbonatschicht etwa 2,5 mm beträgt.

Einer Abscherung oder einem Bruch des Vorsprungs 8 neben dem bzw. am Übergangsbereich zwischen der Randverstärkung 6 und der mittleren Glasscheibe 3 ist durch die überlappende Ausbildung der inneren Glasscheibe 5 bezüglich der ihr zugewandten Oberfläche der Randverstärkung 6 vorgebeugt.

Bei der Herstellung der in der Figur 1 gezeigten erfindungsgemäßen Panzerglasscheibe werden die äußere Glasscheibe 1 und die mittlere Glasscheibe 3 zunächst auf einer Transportstrecke gewaschen und getrocknet. Anschließend wird eine Sandwichstruktur in einem staubfrei gehaltenen und klimatisierten Raum hergestellt. Dabei wird auf die äußere Glasscheibe 1 eine Polyurethanfolie mit einer Stärke von 1 mm - aus einem typischen Bereich für die Folienstärke zwischen ungefähr 0,3 mm bis 5 mm - manuell, halbautomatisch oder vollautomatisch flächendeckend auf die zugewandte Oberfläche der äußeren Glasscheibe 1 aufgelegt und ausgerichtet, so daß die aufgelegte Polyurethanfolie die gesamte innenseitige Oberfläche der Glasscheibe 1 abdeckt. Anschließend wird die mittlere Glasscheibe 3 auf die Polyurethanschicht 2 aufgelegt und derart ausgerichtet, daß sich im Randbereich der zu fertigenden Panzerglasscheibe eine gleichmäßig umlaufende Abstufung ergibt bzw. die äußere Glasscheibe 1 mit einem vorragenden Abschnitt 8 im Randbereich über die mittlere Glasscheibe 3 hinausragt. Auf die randseitig umlaufende freiliegende Oberfläche der Polyurethanfolie bzw. der Polyurethanschicht 2 wird nun ein zuvor aus Stahlblech gefertigter bzw. ausgestanzter Rahmen mit rechteckigem Querschnitt als Randverstärkung 6 aufgelegt, wobei die Breite des Stahlblechrahmens der Breite der rahmenartig freiliegenden Polyurethanschicht 2 entspricht und diese durch die Randverstärkung 6 abgedeckt wird. Zwischen den stumpf benachbarten Stirnseiten der mittleren Glasscheibe 3 und der Randverstärkung 6 wird ein dünner Streifen aus Polyurethanfolie eingelegt, der später einen Teil der Versiegelung 7 bildet. Der dünne Polyurethanstreifen hat die Funktion Bewegungen zwischen der Randverstärkung 6 und der angrenzenden bzw. benachbarten Glasscheibe 3 aufgrund unterschiedlicher thermischer Ausdehnung auszugleichen. Außerdem ist der Polyurethanstreifen dafür vorgesehen, etwaige Fertigungstoleranzen der Randverstärkung 6 und der Glasscheibe 3 im Übergangsbereich zwischen der Randverstärkung 6 und der mittleren Glasscheibe 3 auszugleichen.

Aus der so präparierten Sandwichstruktur wird anschließend unter Erwärmung und Verpressung in einem sogenannten Vorverbundofen ein Vorverbund mit partiell plastifizierten Folien hergestellt, wobei die Lage der Randverstärkung 6 durch entsprechende Abstandshalter eingehalten wird. Bei der Vorbehandlung wird die eingeschlossene Luft aus der Sandwichstruktur fast vollständig herausgepreßt.

Anschließend wird die so vorbehandelte Sandwichstruktur in einen Autoklaven verbracht. In diesem Autoklaven werden bei einem genau definierten Druck- und Temperaturzyklus die Einzelkomponenten der vorbehandelten Sandwichstruktur miteinander verbunden. Während des Autoklavenzyklus wird zunächst unter einem hohen Druck von 12 bis 15 bar, bevorzugt bei 14 bar, das Autoklaveninnere auf eine Temperatur zwischen 120° und 150°C, bevorzugt 130°C, aufgeheizt. Sind die Sollwerte für Druck und Temperatur erreicht, so werden sie über eine Haltezeit im Autoklaven aufrecht erhalten. Anschließend wird dann zunächst die Temperatur und dann der Druck im Autoklaven abgesenkt und die so behandelte Sandwichstruktur entnommen.

In einem nächsten Schritt wird auf die nun freiliegende Oberfläche der mittleren Glasscheibe 3 eine Polyurethanfolie als Polyurethanschicht 4 flächendeckend aufgelegt und ausgerichtet. Auf dieses ausgerichtete Polyurethanfolie wird anschließend die innere, zuvor gereinigte Glasscheibe 5 aufgelegt und derart ausgerichtet, daß die innere Glasscheibe 5 über die Stirnseite der mittleren Glasscheibe 3 vorragt und die Randverstärkung 6 teilweise überlappt, wie in der Figur 1 ersichtlich ist. Da die innere Glasscheibe 5 stirnseitig über die mittlere Glasscheibe 3 vorragt, wird somit zwischen der äußeren Glasscheibe 1 und der inneren Glasscheibe 5 eine Vertiefung 12 ausgebildet, in die sich die Randverstärkung 6 hinein erstreckt. Anschließend wird noch ein Winkel aus Polyurethanfolie auf die Stirnseite der inneren Glasscheibe 5 aufgesetzt, wobei ein Schenkel des Winkels in die Vertiefung 12 eingreift und der andere Schenkel die Stirnseite der inneren Glasscheibe 5 vollständig abdeckt. Der gewinkelte Polyurethanstreifen versiegelt nach Fertigstellung der erfindungsgemäßen Panzerglasscheibe Zwischenräume 11 innerhalb der Vertiefung 12 und die Stirnseite der inneren Glasscheibe 5 und bildet somit einen Teil der Versiegelung 7.

Die so präparierte Sandwichstruktur wird nun wieder in einem Vorverbundofen unter Erwärmung und Verpressung behandelt, um Luft in und im Bereich der Polyurethanschicht 4 und der Versiegelung 7 fast vollständig auszupressen und eine partielle Plastifizierung der Polyurethanfolie der Polyurethanschicht 4 und des Polyurethanmaterials der Versiegelung 7 zu erhalten. Die so erhaltene Vorverbundscheibe wird anschließend wieder in einem Autoklaven behandelt, wobei wiederum der vorstehend erläuterte Druck- und Temperaturzyklus ausgeführt wird, um eine haltbare und feste Verbindung der gesamten Vorverbundscheibe zu erhalten.

## Patentansprüche

1. Panzerglasscheibe, insbesondere zur Verwendung als versenkbare Seitenscheibe eines Kraftfahrzeugs, mit mehreren schichtweise angeordneten Glasscheiben (1, 3, 5) mit dazwischenliegenden Verbundschichten (2, 4), wobei mindestens eine äußere, erste Glasscheibe (1), eine zu der äußeren Glasscheibe (1) nach innen nächstliegende, zweite Glasscheibe (3) und eine zur zweiten Glasscheibe (3) nach innen nächstliegende, dritte Glasscheibe (5) vorgesehen sind, wobei die äußere, erste Glasscheibe (1) am Rand der Panzerglasscheibe über die zweite und dritte Glasscheibe vorragt, um einen Vorsprung (8) zum Eingriff in einen Türrahmen oder Rahmen (14) auszubilden
**dadurch gekennzeichnet,**
**dass** die dritte Glasscheibe (5) am Rand der Panzerglasscheibe über die zweite Glasscheibe (3) vorragt, um zwischen der äußeren, ersten Glasscheibe (1) und der dritten Glasscheibe (5) eine Vertiefung (12) auszubilden, und
**dass** eine Randverstärkung (6) vorgesehen ist, die am Rand der Panzerglasscheibe zumindest an einer innenliegenden Oberfläche der äußeren, ersten Glasscheibe (1) befestigt ist, die innenliegende Oberfläche abdeckt und sich in die Vertiefung (12) derart hinein erstreckt, daß die dritte Glasscheibe (5) die Randverstärkung (6) überlappt und die zweite Glasscheibe (3) und die Randverstärkung (6) stirnseitig zueinander benachbart sind.

2. Panzerglasscheibe nach Anspruch 1, **dadurch gekennzeichnet, daß** die Randverstärkung (6) aus Metall besteht.

3. Panzerglasscheibe nach Anspruch 2, **dadurch gekennzeichnet, daß** die Randverstärkung (6) mittels einer Polyurethanschicht (2) an der äußeren, ersten Glasscheibe (1) angebracht ist.

4. Panzerglasscheibe nach Anspruch 2 oder Anspruch 3, **dadurch gekennzeichnet, daß** die Randverstärkung (6) als ebener Streifen, als ebener, am Rand der Panzerglasscheibe umlaufender Rahmen oder Rahmenabschnitt ausgebildet ist.

5. Panzerglasscheibe nach einem der Ansprüche 2 bis 4, **dadurch gekennzeichnet, daß** die Randverstärkung (6) eine Dicke hat, die kleiner als die lichte Weite der Vertiefung (12) ist, um einen Hohlraum (11) in der Vertiefung (12) auszubilden.

6. Panzerglasscheibe nach einem der Ansprüche 2 bis 5, **dadurch gekennzeichnet, daß** ein Hohlraum (11) zwischen der Randverstärkung (6) und den benachbarten Glasscheiben und/oder zwischen der Randverstärkung (6) und den benachbarten Verbundschichten innerhalb der Vertiefung (12) mittels einer Versiegelung (7) gefüllt ist.

7. Panzerglasscheibe nach Anspruch 6, **gekennzeichnet durch** Polyurethan als Material der Versiegelung (7).

## Claims

1. Bullet-proof glass window, in particular for use as a lowerable side window of a motor vehicle, with several glass panes (1, 3, 5) arranged in layers with laminate layers (2, 4) between them, wherein at least an outer first glass pane (1), a second glass pane (3) arranged inwardly next to the outer glass pane (1), and a third glass pane (5) arranged inwardly next to the second glass pane (3) are provided, wherein the outer first glass pane (1) juts out beyond the second and third glass panes at the edge of the bullet-proof window to form a projection (8) engaging in a frame of a door or frame (14),
**characterized in**
**that** the third glass pane (5) juts out beyond the second glass pane (3) at the edge of the bullet-proof glass window to form a recess (12) between the outer first glass pane (1) and the third glass pane (5), and
**that** an edge reinforcement (6) is provided which is fixed at least to an inward surface of the outer first glass pane (1) at the edge of the bullet proof window, covers the inward surface, and extends into the recess (12) so that the third glass pane (5) overlaps the edge reinforcement (6), and the second glass pane (3) and the edge reinforcement (6) adjoin each other at the face.

2. Bullet-proof glass window according to claim 1, **characterized in that** the edge reinforcement (6) is made of metal.

3. Bullet-proof glass window according to claim 2, **characterized in that** the edge reinforcement (6) is fitted to the outer first glass pane (1) by means of a polyurethane layer (2).

4. Bullet-proof glass window according to claim 2 or claim 3, **characterized in that** the edge reinforcement (6) is formed as a flat strip, as a flat circumferential frame or as a frame section at the edge of the bullet-proof glass window.

5. Bullet-proof glass window according to any of claims 2 to 4, **characterized in that** the thickness of the edge reinforcement (6) has a thickness that is less than the inner width of the recess (12) to form a hollow space (11) in the recess (12).

6. Bullet-proof glass window according to any of claims 2 to 5, **characterized in that** a hollow space (11) between the edge reinforcement (6) and the adjoining glass panes and/or between the edge reinforcement (6) and the adjoining laminate layers is filled by means of a sealing (7) within the recess (12).

7. Bullet-proof glass window according to claim 6, **characterized by** polyurethane as the material used as said sealing (7).

## Revendications

1. Bloc de verre blindé, notamment pour être utilisé en tant que vitre latérale escamotable d'un véhicule automobile, avec plusieurs vitres (1, 3, 5) disposées en couche et des couches de liaison (2, 4) disposées entre ; au moins une première vitre (1) extérieure, une deuxième vitre (3) située le plus près de la vitre (1) extérieure vers l'intérieur et une troisième vitre (5) située le plus près de la deuxième vitre (3) vers l'intérieur étant prévues ; la première vitre (1) extérieure faisant saillie sur le bord du bloc de vitre blindé au dessus de la deuxième et troisième vitre pour former une saillie (8) destinée à s'engrener dans un cadre de porte ou dans un cadre (14), **caractérisé en ce que**,
la troisième vitre (5) fait saillie au bord du bloc de verre blindé sur la deuxième vitre (3) pour former un renfoncement (12) entre la première vitre (1) extérieure et la troisième vitre (5), et
**en ce qu'**on a prévu un renforcement du bord (6) qui est fixé sur le bord du bloc de verre blindé au moins sur une surface se trouvant à l'intérieur de la première vitre (1) extérieure, lequel renforcement recouvre la surface se trouvant à l'intérieur et s'étend dans le renfoncement (12) de manière à ce que la troisième vitre (5) chevauche le renforcement du bord (6) et que la deuxième vitre (3) et le renforcement de bord (6) se trouvent côte à côte du côté de l'avant.

2. Bloc de verre blindé selon la revendication 1, **caractérisé en ce que** le renforcement du bord (6) est composé de métal.

3. Bloc de verre blindé selon la revendication 2, **caractérisé en ce que** le renforcement du bord (6) est appliqué sur la première vitre (1) extérieure au moyen d'une couche de polyuréthane.

4. Bloc de verre blindé selon la revendication 2 ou la revendication 3, **caractérisé en ce que** le renforcement de bord (6) est formé en tant que bande plane, en tant que cadre plane entourant le bord du bloc de verre blindé ou en tant que tronçon de cadre.

5. Bloc de verre blindé selon une des revendications 2 à 4, **caractérisé en ce que** le renforcement de bord (6) a une épaisseur qui est inférieure à la largeur utile du renfoncement (12) afin de former une cavité (11) dans le renfoncement (12).

6. Bloc de verre blindé selon une des revendications 2 à 5, **caractérisé en ce qu'**une cavité (11) entre le renforcement de bord (6) et les vitres adjacentes et/ou entre le renforcement de bord (6) et les couches de liaison adjacentes sont remplis au moyen d'une vitrification (7) à l'intérieur du renfoncement (12).

7. Bloc de verre blindé selon la revendication 6, **caractérisé par** du polyuréthane comme matériau de vitrification (7).
